# EUROPEAN PATENT APPLICATION

(11) **EP 2 202 657 A1**
(43) Date of publication of application: **30.06.2010**
(21) Application number: 08172849.5
(22) Date of filing: 23.12.2008
(51) Int. Cl.: G06F 17/30

(54) **Adaptive implicit learning for recommender systems**

(71) Applicant: Axel Springer Digital TV Guide GmbH, 10117 Berlin (DE)
(72) Inventor: Pronk, Serverius Petrus Paulus, 5262 CN, Vught (NL); Barbieri, Mauro, 5616 JX, Eindhoven (NL)
(74) Representative: Eisenführ, Speiser & Partner

(57) **Abstract**

The present invention relates to an apparatus, method, and computer program product for controlling a recommender system, wherein user actions on content items are associated to explicit ratings on these content items and translated into a UI features profile, which is subsequently used by a recommender. This recommender rates new items based on user actions on this item and thus creates an implicitly learned rating history. This learning makes the implicit rating or scoring personalized. It can be combined in several ways with an explicitly learned rating history to improve overall performance and/or to mitigate the burden for the user, by having him/her rate less items explicitly.

## Description

### FIELD OF THE INVENTION

The present invention relates to an apparatus, a method and a computer program product for implicitly controlling a recommender system for at least one content item.

### BACKGROUND OF THE INVENTION

The use of recommender technology is steadily being introduced into the market. Among various examples, websites offer a recommender to support users in finding content items (e.g. movies) they like, and electronics devices (e.g. personal video recorders) use a recommender for automatic filtering content items. Recommender systems are increasingly being applied to individualize or personalize services and products by learning a user profile, based on feedback from the user on selected content items (e.g. books, songs, television (TV) programs, movies, etc.) and use machine learning techniques to infer the ratings of new items.

A recommender typically learns the preference of a user, based on ratings that the user supplies on items. These ratings are typically binary classifications, such as "like" and "dislike", respectively, or are based on a more elaborate classification into a range of like-degrees. As such, user rating provides an interface by which the user teaches the recommender about his preferences. This learning process is tedious in the sense that the user has to rate a considerable number of items before the recommender can make sensible suggestions. Recommender systems typically require feedback from a user to learn the user's taste. This feedback may be provided explicitly or implicitly. Explicit feedback consists of a user providing ratings for a number of items, i.e. on a five-point scale or in a binary like/dislike form. Implicit feedback comes from observing user actions such as purchases, downloads, selections of items for playback or deletion, etc. The user actions are then interpreted by the recommender system and translated into a scoring. For example, typically, recommender systems interpret a purchase action as positive score, or, in case of video items, a total viewing duration of more/less than 50% may imply a positive/negative score.

Throughout the following it will be distinguished between "ratings" which are given by the user on content items and "scores" or "scoring" which are generated by the recommender system.

Techniques commonly used are collaborative filtering and naïve Bayesian classification. Thereby, from a vast amount of content items, only those items a user (or a group of users) likes or prefers can be retrieved. Recommenders are typically offered as a stand-alone service or unit, or as an add-on to an existing service or unit. They increasingly appear in consumer devices, such as TV sets or video recorders.

Hence, implicit learning frees the user from having to explicitly rate items. However, it is typically less reliable because it is difficult to interpret user actions in a standard way. Users can behave in many different ways that are difficult to interpret with fixed models. Furthermore, user behaviour can evolve over time, making interpreting his/her actions even more difficult.

### SUMMARY OF THE INVENTION

It is an object of the present invention to provide an improved implicit learning method and apparatus, by means of which implicit learning can be adapted to each user individually so as to reflect changing in user behaviour.

This object is achieved by an apparatus as claimed in claim 1, a method as claimed in claim 12, and a computer program product as claimed in claim 13.

Accordingly, the proposed learning approach provides explicit learning of how to translate user actions on content items to scorings on these items. User actions at the user interface are associated to rated content items and the identified and logged user interface actions are considered as metadata belonging to these content items. Thereby, a form of implicit learning can be provided which individually adapts to each user and can evolve over time to reflect changing user behaviour. Although, still, explicitly rated items are required, after sufficient learning, the proposed implicit learning largely frees the user from having to explicitly rate content items. Actually, two rating/scoring processes may be provided: an implicit scoring process and explicit rating process. The rating process may run at a slower pace, effectively relieving the user from continuing to rate many items.

According to a first aspect, the interface actions may comprise control actions for controlling use of the content item. Hence, the control actions may be determined by activations of different keys, or buttons at the user interface, so that detection and logging can be achieved in a simple straightforward manner. According to a specific example, the content item may comprise sequential audio and/or video information and the control actions may control at least one of starting, stopping, deleting, and skipping the audio and/or video information.

According to a second aspect, which can be combined with the above first aspect, the user interface actions may be logged together with associated context information which comprises at least one of a date, time, and sequential order of said at least one content item.. By also logging such date, time, and order information, historical relationships among the user interface actions can be evaluated.

According to a third aspect, which can be combined with any one of the above first and second aspects, the calculator may be adapted to determine from the use of the content item at least one of a fraction of use of the content item, a number of uses of the content item, a longest segment of use without interruptions, a deletion of the content item, a number of times fast forward control was activated, a number of times replay control was activated, a number of times jump forward control was activated, a number of times the content item was skipped, an explicit archiving of the content item, a duration between start and deletion, a time spent for reading metadata, and an access of extended metadata. The obtained characterizing numerical or categorical values provide good indications about the attitude of a user towards the content item, e.g. whether he/she likes or dislikes this content item, provided that the profile obtained from the user actions is sufficiently mature to rate the content item based on these characterizing numerical or categorical values.

According to a fourth aspect, which can be combined with any one of the above first to third aspects, an integrator may be provided for combining the implicit rating history with a supplied explicit rating history. This provides the advantage that less reliable implicit scoring values (e.g. due to low numbers of use) can be enhanced by explicit rating values to potentially improve the final scoring by the recommender system.

According to a fifth aspect, which can be combined with any one of the first to fourth aspects, the calculator may be adapted to postpone a combination of the numerical or categorical values and the given explicit rating for the content item until a predetermined number of the numerical or categorical values are available for the content item. This postponing serves to obtain enough metadata (i.e. user actions) for a content item, before rating it, but assuming that the user interface profile has already matured sufficiently. However, a distinction could be made between doing an implicit scoring using user actions and doing a scoring, based on an implicitly built rating history. The former may only be used for implicitly building a rating history, and can thus be postponed. The latter may not be postponed.

According to a sixth aspect, which can be combined with any one of the above first to fifth aspects, the recommender system may be adapted to combine an implicit profile obtained based on the implicit scoring history obtained from user interface actions with an explicit profile based on an explicit user ratings in an integrated recommender. Implicitly and explicitly built rating histories are thus translated separately into two profiles. Thereby, reliability of the final rating by the integrated recommender may be improved due to the consideration of explicitly obtained user profiles.

According to a seventh aspect which can be combined with any one of the above first to sixth aspect, the recommender system may comprise an implicit recommender for using the implicit rating history, an explicit recommender which is controlled based on an explicit rating history, and a combiner for combining outputs of the implicit and explicit recommenders. Similar to the sixth aspect, the combination of the explicit and implicit recommenders provides potentially improved reliability of the final rating.

According to an eighth aspect, which can be combined with any one of the above first to seventh aspects, wherein an input function for an explicit rating may be activated if the recommender indicates that a predetermined confidence of the user interface profile has not been reached. This input function ensures that an explicit user profile can be obtained in cases where the reliability of implicit rating is not sufficient. In the eighth aspect, the recommender system may for example be based on the system described in Pronk et al. "Incorporating confidence in a naive Bayesian classifier", LNAI 3538, Springer, Proceedings of the 10th International Conference on User Modeling, UM'05, Edinburgh, Scotland, July 24-29, 317-326.

According to a ninth aspect, an input function for an explicit rating may be activated if the calculator detects that a predetermined number of logged interface actions but no explicit rating has been obtained for a content item. This measure ensures that an explicit rating is available before a contribution is calculated for a content item.

It is noted that the above control or recommender apparatus can be implemented as discrete hardware circuitry with discrete hardware components, as an integrated chip, as an arrangement of chip modules, or as a signal processing device or computer device or chip controlled by a software routine or program stored in a memory.

### BRIEF DESCRIPTION OF THE DRAWINGS

The invention will now be described, by way of example, based on embodiments with reference to the accompanying drawings, wherein:
Fig. 1 shows a schematic block diagram of a recommender system in which the present invention can be implemented;
Fig. 2 shows a schematic block diagram of a recommender in which the present invention can be implemented;
Fig. 3 shows a schematic block diagram of a recommender according to a first embodiment; and
Fig. 4 shows a schematic diagram indicating alternative structures of the recommender including a second and a third embodiment.

### DESCRIPTION OF EMBODIMENTS

Embodiments of the present invention will now be described based on an exemplary recommender system which generates ratings and scorings on content items, such as books, TV programs, movies, etc.

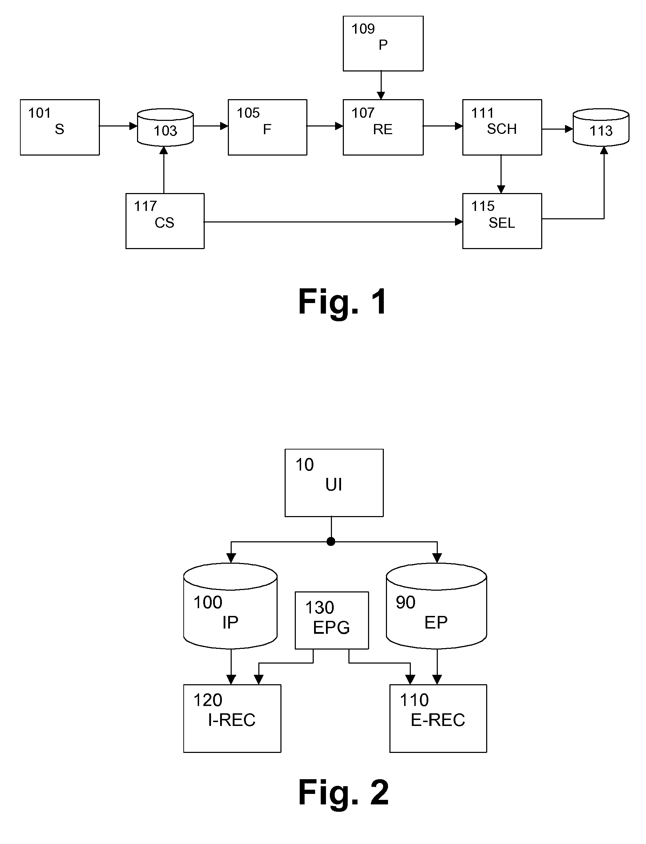

Fig. 1 shows a schematic block diagram of a recommender system which comprises an information data store 103 connected to a source (S) 101. The source 101 may, for example, be an electronic program guide (EPG) service on the Internet, which provides information data on TV programs. The information data store 103 can be connected to at least one filter (F) 105 which is associated with a personalized content channel. It is noted that any number of personalized content channels could be provided. The output of the filter 105 is connected to a respective recommender engine (RE) 107. Thus, each personalized content channel may have an own recommender engine 107 associated therewith. Each recommender engine 107 and hence personalized content channel has a profile (P) 109 associated therewith. The output of the recommender engine 107 is connected to a scheduler (SCH) 111. The scheduler 111 is connected to a storage device 113 (e.g. a set of hard disk drives), and to a selector (SEL) 115. The information data store 103 is also connected to a content source (CS) 117. The content source 117 provides for example at least audio/video information in a broadcasting or on-demand fashion. In addition, the content source 117 may provide information data, e.g. EPG information inside the vertical blanking interval of the video signal, or MPEG-7 metadata on segments of a particular content item (e.g. the scene boundaries of a movie). The content source 117 is connected to the selector 115 comprising at least one set of content isolation means (e.g. a tuner or the like) allowing to isolate one or more content items for recording on the storage device 113. The output of the selector 115 is connected to the storage device 113.

The operation of the apparatus of Fig. 1 will now be described. Information data of a current content item to be played out on a personalized content channel is gathered from the source (Internet) 101 or obtained via other means, e.g., via transmission in the vertical blanking interval of an analogue TV broadcast signal or via digital video broadcast (DVB) transport streams, or combinations of any of the above. A content item may be a TV program, data stream containing video and/or audio data or a segment of a program etc.

The information data may comprise a plurality of attributes and attribute values associated with a content item such as title, actors, director and genre. Each profile 109 is based on the information data together with data indicating the "like" or "dislike" of the user. The rating of a "like" and "dislike" can be based on feedback on content items that pass the associated filter 105. This feedback can be given as explicit rating by the users that use the particular personalized content channel. The ratings can be made in several ways. For example, the user can, using a remote control device, indicate for a currently selected content item or a given attribute of the current content item his rating ("like" or "dislike") by pressing appropriate buttons on a user interface (e.g. the remote control device). Alternatively, the behaviour of the user can be observed, so that fixed rules for all users can be replaced by rules that are "learned" and personalized for each user. In a more advanced setting, a "like" degree on a discrete or continuous scale can be provided or calculated instead of just a "like" or "dislike" classification.

When information data of a content item passes the filter 105, this information data is forwarded to the recommender engine 107. The recommender engine calculates a "like" degree or rating, based on its associated profile 109, for this subsequent content item. The information data associated to the subsequent content item is then forwarded, along with the computed rating, to the scheduler 111, which subsequently computes a recording schedule that will be used to schedule the recording of content items offered by the recommender engine 107 onto the storage device 113. In particular, the scheduler 111 may primarily consider the content items of high like degree or rating while still considering sufficient new content for each personalized content channel.

To this end, the recording schedule computed by the scheduler 111 is used to instruct the selector 115 to select the content items available from the content source 117 to record them on the storage device 113.

Use or user profiles can be derived using implicit profiling and explicit profiling. Implicit profiling methods derive content use profiles unobtrusively from the user's use histories, e.g., sets of TV shows watched and not watched. Explicit profiling methods may derive content use profiles by letting the user specify ratings on the level of content items.

Fig. 2 shows a schematic block diagram of a user interface with implicit and explicit profiling options, in which the present invention can be implemented. A user interface (UI) 10 is provided, which may be for example a remote control or any other type of control device by which the user can control use of a content item. The user interface 10 may also be implemented on a display screen that a user can interact with, e.g. a touch screen. According to Fig. 2, the user interface 10 is associated with a recommender system comprised of explicit and implicit based preference profiles 90, 100 which respectively provide input to explicit and implicit recommenders 110, 120. An EPG 130 inputs data relating to TV shows to both of the recommenders 110, 120. Such data may include the title, channel, start time and other features of each TV show.

The user interface 10 of Fig. 2 can be used to control the content of the explicit and implicit based profiles 90, 100 to thereby control the explicit and implicit recommenders 110, 120.

According to a first embodiment, a method and an apparatus are proposed, by which explicit learning on how to translate user actions on items to ratings or scorings on these items can be achieved. This is done by associating user actions at a user interface to rated items and considering these actions as metadata belonging to these items. Thereby, a form of implicit learning is provided that adapts to each user individually and reflects changing user behaviour.

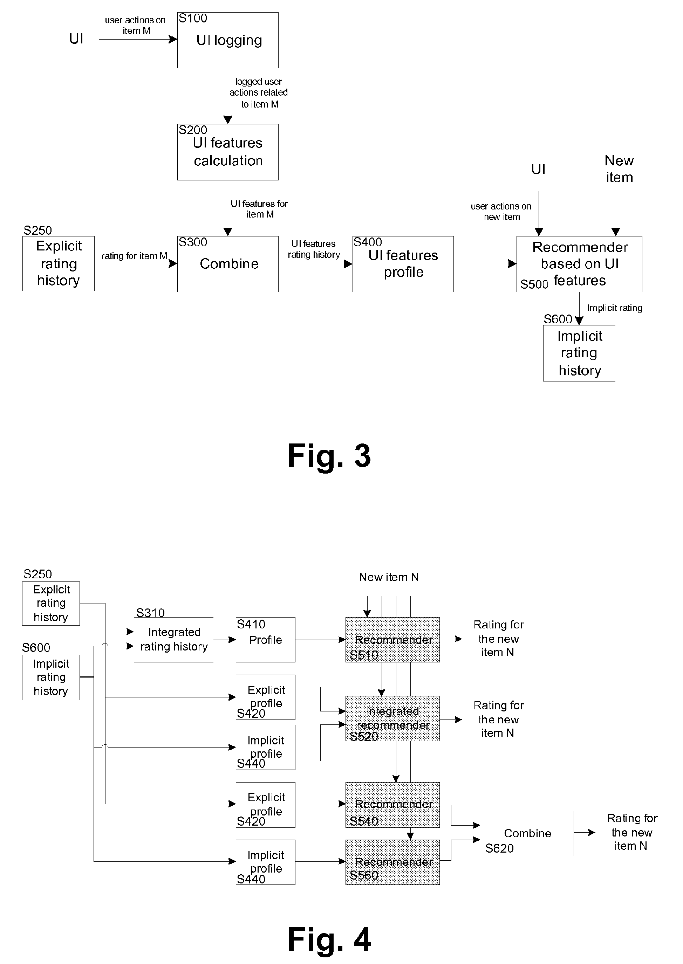

Fig. 3 shows a schematic diagram of basic steps, elements or components of a control apparatus which enables the proposed adaptive implicit learning. Given a content item M which is used by a user, the apparatus or system logs all user interface actions, such as start (e.g. play), stop, delete, skip, together with context information such as time of the day, day of the week, previously accessed item, etc. (component S100). These user actions are then translated into user interface (UI) features. The UI features characterize the use or way of use of the specific content item and have to be properly designed to capture the richness of user interaction but abstract from the details. For example, the calculator may calculate as UI feature a fraction of use of a content item (e.g. fraction of a program viewed) instead of using start and stop timestamps. Examples of UI features calculated in component S200 are:
- Fraction of use (e.g. playing) of the content item
- Number of uses (e.g. number of views)
- Longest segment of use without interruptions (e.g. longest segment viewed without interruptions)
- Content item (e.g. program) explicitly deleted by the user
- Number of times fast forward was used
- Number of times replay was used
- Number of times jump forward was used
- Number of times the content item (e.g. program) was skipped
- Whether the content item was explicitly archived by the user
- Time duration between start (e.g. play) and deletion
- Time duration spent reading metadata
- Accessing extended metadata

The calculated UI feature values are associated to the content item M and stored. The calculated UI feature values can be accumulated over time depending on the user actions.

Optionally, if a user provides an explicit rating for a concerned content item (component S250), this rating can be combined in component S300 with the UI feature values associated to the same content item. As a further option, this association between implicit scorings and explicit ratings may not be instantaneous, but could be postponed until sufficient implicit UI features values have been calculated or are available for the concerned content item e.g., not before the concerned content item is deleted (or archived), or not before a certain fixed number of user actions at the user interface have been applied to the concerned content item. The sufficient implicit UI features may correspond to a predetermined number which may be fixed or which may depend on the type of content item.

The output of the combination in component S300 can be called UI features rating history. An example of such a rating history is given in the following Table 1.

**Table 1: example of part of a UI features rating history**

| Item id | (UI feature, value) | Rating |
|---|---|---|
| 1 | (Fraction viewed, 0.6-0.7) | Like |
| 1 | (Time reading metadata, 3-4 min) | Like |
| 2 | (Fraction viewed, 0.1-0.2) | Dislike |
| ... | ... | ... |

Then, in component S400, the obtained UI features rating history is translated into a UI features profile suitable for a recommender based on UI features. Any known machine learning algorithm can be used to realize a recommender based on UI features, such as naïve Bayesian classification, decision trees, support vector machines, neural networks etc. For example, in case of a naïve Bayesian classifier, the UI features profile calculated in component S400 can be represented as illustrated in the following Table 2.

**Table 2: example of part of a UI features profile**

| UI feature | U1 value | Like count | Dislike count |
|---|---|---|---|
| Fraction viewed | 0.6-0.7 | 20 | 3 |
| Fraction viewed | 0.1-0.2 | 1 | 24 |
| Time reading metadata | 3-4 min | 16 | 5 |
| ... | ... | ... | ... |

It is to be noted that, although only one item M is shown in Fig. 3, multiple of those items with UI features and explicit ratings accumulate in a UI features rating history.

The actual implicit learning is then performed in component S500 whenever a new content item is available and the user applies a sufficient number of UI actions to this content item. Based on the UI features extracted from this content item and the UI features profile, the recommender can calculate a scoring for this new content item based on the UI features. Thus, for each new item to be scored, the logged user actions (obtained in component S100) and derived UI features (obtained in component S200) are necessary.

Finally, the obtained scoring is added in component S600 to a stored implicit rating history. Thus, an adaptive implicit learning scheme can be provided for recommender systems.

Fig. 4 shows a schematic block diagram of a recommender system with implicit and explicit recommenders, in which the above implicit rating history can be used.

According to the upper row or branch of the diagram of Fig. 4, anintegrated rating history is generated from an explicit rating history of component S250 of Fig. 3 and an implicit rating history of component S600 of Fig. 3. Based on an integrated rating history obtained from component S310, an integrated profile is generated in component S410 and supplied to a recommender in component S510, where a rating for a new content item N is obtained based on the integrated profile and the data of the new content item.

As an alternative according to a second embodiment which corresponds to the middle branch or row of Fig. 4, the explicit and implicit rating histories S250, S600 may be used separately to generate an explicit profile in component S420 and an implicit profile in component S440 which are both input into an integrated recommender (component S520) to obtain a rating for a new content item N. Thus, two separate profiles are built, based on two rating histories, and these separate profiles are combined in a single, integrated recommender. Such a single integrated recommender is for example described in V. Pronk et al., "Incorporating user control into Recommender Systems based on Naïve Bayesian Classification", Proc. ACM Recommender Systems, RecSys'07, Minneapolis, MN, USA, Oct 19-20.

As another alternative according to a third embodiment which corresponds to the lower branch or row of Fig. 2, the explicit and implicit profiles generated in components S420, S440 may be supplied to separate explicit and implicit recommenders (components S540, S560) and subsequently combined in a combiner (component S620) to obtain a rating for the new content item N. Thus, in the third embodiment a separate implicit recommender is provided, which only uses implicit rating history. The outcomes of this recommender (component S560) and the explicit recommender (component S540) can be combined in various ways, for example by using radial basis functions to build up function approximations.

As a further option for all above embodiments, the recommender system may be adapted to initiate an input action (e.g. dialog with the user, input request, or the like) to solicit an explicit rating by the user if the implicit recommender cannot produce a scoring with sufficient confidence based on the provided UI features and/or if it is detected (e.g. by component S300 in Fig. 3) that a predetermined (sufficient) number of logged interface actions but no explicit rating has been obtained for a content item. The required confidence may thus depend on the number of UI feature values obtained for the concerned content item or on the maturity of the UI features profile . The obtained explicit rating can then be added to the explicit rating history and combined with the low confidence scoring or used without considering any implicit rating.

It is noted that the present invention can be applied to recommender systems for set-top boxes, TV sets, mobile phones, personal digital assistants (PDAs), personal computers (PCs) and all devices where recommenders are used to collect, filter, and present content from multiple sources to their users. Additionally, it can be applied on servers or by services on the Internet or any other data network. The invention is thus not restricted to recommenders of television or film content, but can be applied to music, theatre shows, and all types of products and services for which usage data or user action data can be obtained for the recommender..

In summary, an apparatus, method, and computer program product for controlling a recommender system have been described, wherein user actions on content items are associated to explicit ratings on these content items and translated into a UI features profile, which is subsequently used by a recommender. This recommender rates new items based on user actions on this item and thus creates an implicitly learned rating history. This learning makes the implicit rating or scoring personalized. It can be combined in several ways with an explicitly learned rating history to improve overall performance and/or to mitigate the burden for the user, by having him/her rate less items explicitly.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. A single processor or other unit may fulfill at least the functions of Fig. 3 and Fig. 4 based on corresponding software routines. The computer program may be stored/distributed on a suitable medium, such as an optical storage medium or a solid-state medium supplied together with or as part of other hardware, but may also be distributed in other forms, such as via the Internet or other wired or wireless telecommunication systems. The mere fact that certain measures are recited in mutually different dependent claims does not indicate that a combination of these measures cannot be used to advantage. Any reference signs in the claims should not be construed as limiting the scope thereof.

## Claims

1. An apparatus for controlling a recommender system, said apparatus comprising:
a) a logger (S100) for detecting and logging user interface actions for at least one content item controlled by the user interface;
b) a calculator (S200, S300) for calculating, based on the logged user interface actions, numerical or categorical values characterizing use of a content item, and for determining from said numerical or categorical values and from an explicit user rating on said content item, a contribution to a rating history; and
c) a converter (S400) for converting said rating history into a user interface profile which is supplied to a recommender (S500) to rate a new content item;
d) wherein an output of said recommender (S500) is used as an implicit rating history (S600) for said recommender system.

2. The apparatus according to claim 1, wherein said interface actions comprise control actions for controlling use of said content item.

3. The apparatus according to claim 2, wherein said content item comprises sequential audio and/or video information and said control actions control at least one of starting, stopping, deleting, and skipping said audio and/or video information.

4. The apparatus according to claim 1, wherein said logger (S100) is adapted to log said user interface actions together with associated context information which comprises at least one of a date, time, and sequential order of said at least one content item..

5. The apparatus according to claim 1, wherein said calculator (S200, S300) is adapted to determine from said use of said content item at least one of a fraction of use of said content item, a number of uses of said content item, a longest segment of use without interruptions, a deletion of said content item, a number of times fast forward control was activated, a number of times replay control was activated, a number of times jump forward control was activated, a number of times said content item was skipped, an explicit archiving of said content item, a duration between start and deletion, a time spent for reading metadata, and an access to extended metadata.

6. The apparatus according to claim 1, further comprising an integrator (S310) for combining said implicit rating history with a supplied explicit rating history.

7. The apparatus according to claim 1, wherein said calculator (S200, S300) is adapted to postpone combination of numerical values and the given explicit rating for said content item until a predetermined number of said numerical or categorical values are available for said content item.

8. The apparatus according to claim 1, wherein said apparatus is adapted to combine an implicit profile obtained based on said implicit rating history with an explicit profile, based on an explicit rating history in an integrated recommender (S520).

9. The apparatus according to claim 1, wherein said recommender system comprises an implicit recommender (S560) for using said implicit rating history, an explicit recommender (S540) which is controlled based on an explicit rating history, and a combiner (S620) for combining outputs of said implicit and explicit recommenders (S560, S540).

10. The apparatus according to claim 1, wherein said apparatus is adapted to activate an input function for an explicit rating if said recommender (S500) indicates that a predetermined confidence of said user interface profile has not been reached.

11. The apparatus according to claim 1, wherein said apparatus is adapted to activate an input function for an explicit rating if said calculator (S300) detects that a predetermined number of logged interface actions but no explicit rating has been obtained for a content item.

12. A method of controlling a recommender system, said method comprising:
a) logging user interface actions for at least one content item controlled by the user interface;
b) calculating, based on the logged user interface actions, numerical or categorical values characterizing use of a content item;
c) determining from said numerical or categorical values and from an explicit user rating on said content item, a contribution to a rating history;
d) converting said rating history into a user interface profile for said content item, which is supplied to a recommender to rate a new content item; And
e) using an output of said recommender as an implicit rating history for said recommender system.

13. A computer program product comprising code means for producing the steps of method claim 12 when run on a computer device.
